# EUROPEAN PATENT SPECIFICATION

(11) **EP 1 646 530 B1**
(45) Date of publication and mention of the grant of the patent: **25.02.2009**
(21) Application number: 03779771.9
(22) Date of filing: 19.12.2003
(51) Int. Cl.: B60R 9/06, B60R 9/10

(54) **BICYCLE RACK**
FAHRRADTRÄGER
PORTE-BICYCLETTES

(30) Priority: 23.12.2002 DK 200201998
(43) Date of publication of application: 19.04.2006
(73) Proprietor: Special Autotrading A/S, 3060 Espergaerde (DK)
(72) Inventor: LUND, Benjamin, DK-3060 Espergaerde (DK); TEISEN-SIMONY, Claude, DK-2000 Frederiksberg (DK)
(74) Representative: Tonnesen, Bo
(86) International application number: PCT/DK2003/000925
(87) International publication number: WO 2004/056611

(56) References cited:
- WO-A1-92/19470
- DE-U1- 8 900 184
- DE-U1- 9 116 165

## Description

The invention relates to a bicycle rack for mounting on the tow-bar of a car.

Essentially, bicycle racks are traditionally V-shaped and designed to be mounted on the spherical ball of a tow-bar.

This bicycle rack is simple to transport, takes up little space and its weight is such that anyone can lift it and manoeuvre it into position on the tow-bar ball.

Once the rack has been manoeuvred into position, the V-shaped poles must be thrust into place so that they end up locked in the extended position. The latter process often causes problems when having to both extend and dislodge the poles.

These processes involve exerting a good deal of force. Many people are frightened by the prospect of having to release the poles from the locked position since the actual release can be perceived as sudden, disarming and rather violent.

The latter process is known from experience to deter many people from using bicycle racks.

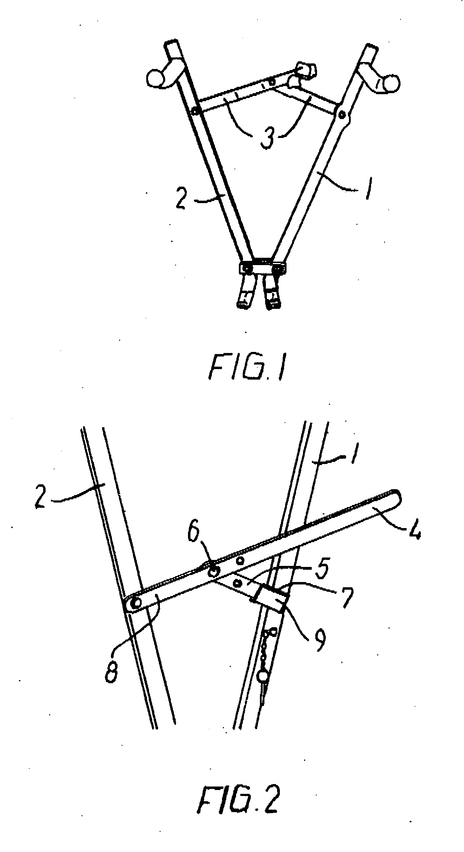

Figure 1 shows how a traditional rack may typically be appointed in technical terms, and it is certainly possible to envisage the force needed to squeeze the two poles together into a locking situation. Similarly, the illustration enables one to imagine the force released when dismantling the bicycle rack from the locking position.

The poles swing open-rather violently so, some people may think.

Similar bicycle racks are known from DE 8900184 U1, WO 92/19470 A1 and DE 9116165 U1.

According to the invention, a collapsible V-shaped bicycle rack having the features of claim 1 is proposed to solve these problems.

The choice of material is chiefly the same as with traditional bicycle racks-metal or stiff iron.

Instead of the"broken pole principle", the rack has been designed with a relatively long crossbar secured in a movable link in one of the V-bars.

The length of the crossbar is oversized so as to extend well beyond the edge of the opposite V-bar in the extended, locked state.

From the crossbar securing point on one V-bar, and from there approximately a quarter of the length of the crossbar, along the latter, a small secondary crossbar is secured-also in a movable link. This short crossbar is approx. one fifth the length of the long crossbar and is secured in a movable link at the other end to the V-bar, where the long crossbar is not secured. The top two movable links on the V-bars are positioned opposite each other, physically locating these two points at the same distance from the base of the V-bars.

This design allows the rack, including crossbars, to be manipulated into various positions in a closed, collapsed state, when the rack takes up as little space as possible and can be stored in the boot of a car, for example; the rack can then be forced into an extended locked position on the tow-ball without the need to employ great force.

The long crossbar is forced down into a kind of backstop, which is shaped like a U-bar and welded onto the short pole, matching the dimensions of both the short and the long crossbars. By moving the long crossbar down into the stop, thereby "slotting" the crossbar into place, this movement results in the crossbars forcing the V-bars out so as to give the rack the optimal characteristic V shape that also forms the basis for using the rack to transport bicycles. When the long crossbar is firmly secured in the stop, the long crossbar will overlap with the short one. The long crossbar will be below the parallel horizontal level and will thus self-lock if the two V-bars are actuated against each other.

These conditions are met as a result of features including the clever styling of the stop and the geographical siting on the short crossbar. The stop is positioned at a distance from the base of the short crossbar-as viewed in the collapsed-rack situation-and from there essentially a short way in along the crossbar-preferably about one third of the length of the crossbar to the stop. As explained above, the stop dimensions have been tailored to the respective dimensions of the long and the short crossbars-the width corresponding approximately to the width of the long crossbar, though the stop is dimensioned so as to project beyond the bottom of the short crossbar.

Thus, when the long crossbar is at the base of the stop, there will be a difference in level between the short and the long crossbar, giving the long crossbar a slightly oblique angle, with the projecting part of the long crossbar pointing a few degrees downwards in relation to the horizontal.

The centre of gravity is shifted outwards slightly on the long crossbar and is thus instrumental in stabilizing the rack, given that-as written above-the long crossbar will self-lock if the two V-bars are actuated against each other due to inward pressure.

The base is rounded off slightly, causing it to narrow marginally so that as the long crossbar reaches the base of the stop, the constriction produces light pressure on the long crossbar.

This pressure results in retention of the long crossbar with additional stability. The upper outer edge of the stop gently flares slightly, thereby projecting a fraction beyond the upper edge of the short one. This ensures that in the receiving position, depressing the long crossbar into the stop will be done from an ideal starting point.

The reason that violent force need not be used-both when securing and releasing the crossbars-can primarily be explained by the length of the long crossbar.

The well-known lever principle is essentially the explanation-in principle, the longer the crossbar (up to a natural limit), the less weight has to be used to force it into the correct position.

Conclusion: the length of the crossbar eliminates the need to deploy great force-the lever principle sees to that-and at the same time the long crossbar is of sufficient length to ensure that the top of the crossbar does not go beyond the top of the rack in the closed and assembled state.

The holders for the bicycles can be tilted over onto the opposite side so as not to obstruct the long crossbar when the rack is collapsed.

Once folded down, the physical size of the rack is minimized in the collapsed position.

### LIST OF FIGURES

Figure 1
   Example of a traditional bicycle rack located on a tow-bar with ball. The "broken crossbar principle" is illustrated here.
Figure 2
   V-bars 1 and 2 from a frontal perspective.
Figure 3
   Illustration of the bicycle rack completely opened up into the extended position.
Figure 4
   Stop 7 viewed from above, and bicycle holders 9 collapsed under the rack.
Figure 5
   Stop 7 viewed from above, with details.

Figure 1 illustrates a typical example of a traditional bicycle rack. As the picture shows, extension of the V-bars (1,2) is by means of the "broken crossbar" (3). By pressing down on the vertex of the two crossbars, the V-bars are forced apart, finally ending up in the locked and secured position. This is the case when the two crossbars have been pressed home and together form a horizontal line. Owing to the design, pressing down on the crossbar requires the use of great energy-for both mounting and dismounting.

Figures 2, 3, 4 and 5 illustrate how this problem can be solved in a surprising new way.

By way of introduction, it should be pointed out that whenever terms like left and right are used, such positions must be observed from the front-in the exact location displayed in the pictures.

The choice of material is essentially metal or stiff iron.

Instead of the "broken pole principle", the new rack has been designed with a relatively long crossbar (4) secured in a movable link (8) in the lefthand V-bar.

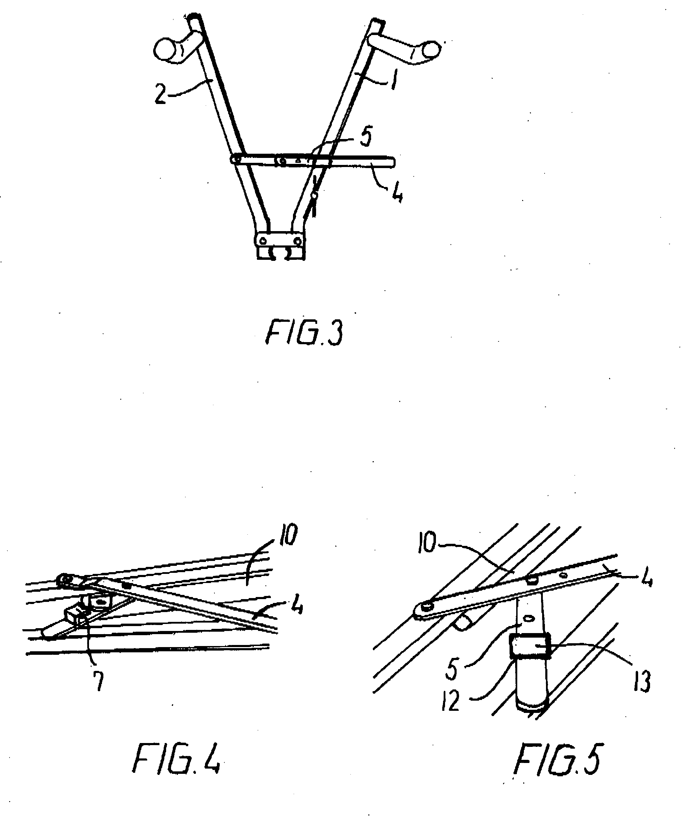

The length of the crossbar is oversized, as a result of which it extends well beyond the edge of the righthand V-bar (1) in the extended, locked state, Fig. 3.

From the point the crossbar is secured on the lefthand V-bar (8) and from there roughly one quarter of the length of the crossbar along the latter, a short small crossbar (5) is retained-also in a movable link (6). This short crossbar (5) is approx. one fifth the length of the long crossbar (4) and is secured in a movable link at the other end (9) to the righthand V-bar (1).

The top two movable links on the V-bars are positioned opposite each other so that, physically, these two points are located at the same distance from the base of the V-bars. This design offers the advantage of being able to manipulate the rack, including crossbars, into different positions-mainly either in a closed (compact) state, when the rack takes up as little space as possible and can be stored in e.g. the boot of a car, or by forcing the rack into an extended locked position on the tow-ball without the need to use intense force.

Applying light pressure, the long crossbar (4) is forced down into a stop (7), which is a piece of bent metal, shaped roughly like a half U-bar and welded primarily onto the bottom of the short crossbar 5, the diameter of this U-bar having been adapted to the dimensions of the four narrow sides of the long crossbar, allowing the latter to be forced into a stable and locked position at the base of the stop.

By forcing down the long crossbar 4 into the stop so that the crossbar "slots" into position, this movement (energy transfer)-via securing point 6-simultaneously provides thrust to the short crossbar 5 which-benefiting from this thrust-presses out V-bars 1 and 2 so as to give the rack its optimal and characteristic V shape (Fig. 3), which forms the basis for using the rack to transport bicycles. When the long crossbar 4 is secured in the stop 7, the former 4 will be positioned beyond the short one 5.

Stability is optimized by means including the clever styling of the stop and it's sitting on the short crossbar (5). The stop (7) is positioned at a distance from the base of the short crossbar-as perceived in the collapsed-rack situation-and thence essentially a short way in along the crossbar (5)-preferably one third of the length of the short crossbar to the edge of the stop (7).

The stop has been dimensioned so as to project beyond the bottom of the short crossbar.

As the long crossbar is positioned in the stop, owing to the way it is dimensioned (greater depth), the stop will be positioned below the parallel horizontal level, having a slightly oblique angle, with the projecting part of the long crossbar 4 pointing slightly downwards.

The centre of gravity is shifted outwards slightly on the long crossbar and is thus instrumental in stabilizing the rack, given that-as set out above-the long crossbar will self-lock if the two V-bars are actuated against each other in the event of an inadvertent inward motion of the V-bars (1,2). The base of the stop (7) features slight rounding (12), thus causing it to taper marginally so that when the long crossbar (4) reaches the base of the stop, the constriction produces light pressure on the long crossbar on physical contact with the latter.

This pressure is instrumental in further stabilizing retention of the long crossbar (4).

The upper outer edge of the stop gently flares slightly (13), projecting out a fraction beyond the upper edge of the short crossbar. This ensures that in the receiving position, depressing the long crossbar into the stop will be done from an ideal starting point-if the long crossbar (4) were to wobble a little outwardly, the probability of it inching beyond the upper edge of the stop (13) when depressed into the same would be slight.

The reason that violent force need not be used-both when securing and releasing the crossbars-can primarily be explained by the length of the long crossbar (4).

The well-known lever principle is essentially the explanation-in principle, the longer the crossbar (up to a natural limit), the less weight has to be used to force the V-bars (1, 2) into the correct position.

Four objectives are achieved:
1. The length of the crossbar means that there is no need to use great force, either when securing or collapsing the rack-the lever principle is the key to explaining this advantage.
2. The long crossbar and dimensioning of the stop make for increased stability.
3. The appropriate length of the long crossbar (4) means that the top of the crossbar does not for the most part extend beyond the top of the rack in the closed and assembled state, thereby minimizing its physical dimensions and making it a handy accessory for the car-easy to store and easy and simple to transport.
4. In the collapsed state, the holders (9) for the bicycles are tilted over onto the opposite side by means of a swivel arm on the top of the V-bars (1,2). Hence, when the rack has been collapsed, the long crossbar (4) can be freely taken to the top without bumping into the holders (9). This ensures an additionally convenient-to-operate transportation and storage function.

Numbering
1. Right V-bar seen from a frontal perspective
2. Left V-bar seen from a frontal perspective
3. Broken crossbar on commonly used bicycle rack
4. Long crossbar
5. Short crossbar
6. 4 and 5 securing point-movable link
7. Stop - half U-bar
8. Securing point on long crossbar (movable) in left V-bar
9. Securing point on short crossbar 4 (mobile) in right V-bar 1
10. Bicycle holders
11. Snap hook
12. Rounding on base of stop
13. Gentle flare on stop
14. Swivel arm for bicycle holders

## Claims

1. A collapsible V-shaped bicycle rack for mounting on a tow-ball, with two upper projecting arms for mounting bicycles on the rack, each secured to its own V-bar (1,2) with movable links, and with two crossbars (4,5) pivotally secured on the V-bars (1,2) and interconnected by a turning joint (6), **characterized in that** the crossbars (4,5) are of different length and **in that** the long crossbar (4), when the rack has been mounted on the tow-ball, projects beyond the V-bar (1) and the short crossbar (5) is fitted with a U-bar as a stop (7), wherein the increased length of the long crossbar (4) can preferably be dimensioned so as to extend to the edge of the top of the bicycle rack or project slightly over the same when the bicycle rack has been collapsed.

2. Bicycle rack in accordance with claim 1 **characterized in that** the base of the stop (7) has a slight rounding (12), thus causing it to taper marginallly, wherein the dimensioning of the stop (7) is such that its bottom edge is positioned below the bottom of the short crossbar, wherein, when the rack is locked into the extended position (Fig. 3), the long crossbar will be a fraction below the parallel horizontal level (Fig. 3) and wherein the upper outer edge of the stop gently flares slightly (Fig. 5: 13) and projects out slightly beyond the upper edge of the short crossbar.

3. The bicycle rack in accordance with one or more of the above claims is **characterized in that** the bicycle holders (10) can be tilted from the folded-out user position onto the opposite side of the rack in the collapsed state with the aid of swivel arms that must be positioned at the top of the V-bars (1,2), where the holders (10) are also located physically, wherein the swivel arms (14) are physically connected with the holders (10) at the root of the holders.

## Patentansprüche

1. Ein zusammenklappbarer V-förmiger Fahrradträger zur Montierung auf einer Kupplungskugel, mit zwei oberen, herausragenden Armen zur Befestigung von Fahrrädern auf dem Träger, von denen jedes an seiner eigenen V-Schiene (1,2) mit beweglichen Verbindungen befestigt wird, und mit zwei Kreuzschienen (4,5), die drehbar an den V-Schienen (1,2) befestigt und durch ein Drehgelenk (6) miteinander verbunden sind, **dadurch gekennzeichnet, dass** die Kreuzschienen (4,5) von verschiedener Länge sind und dass die lange Kreuzschiene (4), wenn der Träger auf der Kupplungskugel montiert ist, über die V-Schiene (1) hinausragt, und die kurze Kreuzschiene (5) mit einer U-Schiene als Anschlag (7) versehen ist, wobei die Längenverlängerung der langen Kreuzschiene (4) vorzugsweise so dimensioniert sein kann, dass sie sich bis zur oberen Kante des Fahrradträgers erstreckt oder leicht über diese hinausragt, wenn der Fahrradträger zusammengeklappt ist.

2. Fahrradträger gemäss Anspruch 1, **dadurch gekennzeichnet, dass** die Basis des Anschlags (7) eine leichte Rundung (12) aufweist, die eine marginale Verjüngung derselben verursacht, wobei der Anschlag (7) so dimensioniert ist, dass sich seine Unterkante unter dem unteren Ende der kurzen Kreuzschiene befindet, wobei sich die lange Kreuzschiene, wenn der Träger in der geöffneten Stellung verriegelt ist (Fig. 3), etwas unterhalb der parallelen Horizontalebene befindet (Fig. 3), und wobei sich die obere Aussenkante des Anschlags sanft leicht aufweitet (Fig. 5: 13) und leicht über die Oberkante der kurzen Kreuzschiene hinausragt.

3. Der Fahrradträger gemäss einem oder mehrerer der obigen Ansprüche Ist **dadurch gekennzeichnet, dass** die Fahrradhalter (10) aus der ausgeklappten Benutzungsstellung auf die gegenüberliegende Seite des Trägers in den zusammengeklappten Zustand geschwenkt werden können mit Hilfe von Schwenkarmen, die am oberen Ende der V-Schienen (1,2) angebracht sein müssen, wo sich auch die Halter (10) physisch befinden, wobei die Schwenkarme (14) physisch mit den Haltern (10) an der Basis der Halter verbunden sind.

## Revendications

1. Un porte-bicyclettes pliable formé en V pour montage sur une boule d'attelage, avec deux bras en saillie supérieurs pour le montage de bicyclettes sur le porte-bicyclettes, chaque bras étant fixé à sa propre barre en forme de V (1,2) avec des articulations mobiles, et avec deux barres transversales (4,5) fixées de manière pivotante sur les barres en forme de V (1,2) et interconnectées par un joint rotatoire (6), **caractérisé en ce que** les barres transversales (4,5) ont des longueurs différentes et **en ce que** la barre transversale longue (4), lorsque le porte-bicyclettes a été monté sur la boule d'attelage, se projette au-delà de la barre en forme de V(1) et la barre transversale courte (5) est ajustée avec une barre en forme de U pour faire un arrêt (7), où la longueur augmentée de la barre transversale longue (4) peut être préférablement dimensionnée de manière à s'étendre jusqu'au bord du sommet du porte-bicyclettes ou se projetter légèrement au dessus du même lorsque le porte-bicyclettes est pliée,

2. Le porte-bicyclettes selon la revendication 1, **caractérisé en ce que** la base de l'arrêt (7) a un léger arrondi (12), faisant en sorte qu'elle se ressère de manière marginale, où le dimensionnement de l'arrêt (7) est tel que son bord inférieur est positionné au-dessous le fond de la barre transversale courte, où, lorsque le porte-bicyclettes est bloqué dans la position étendue (Fig. 3), la barre transversale longue sera une fraction au-dessous le niveau horizontal parallèle (Fig. 3) et où le bord extérieur supérieur de l'arrêt s'élargit doucement quelque peu (Fig. 5: 13) et se projette légèrement au-delà du bord supérieur de la barre transversale courte.

3. Le porte-bicyclettes selon au moins une des revendications ci-dessus est **caractérisé en ce que** les les support de bicyclettes (10) peuvent être inclinés de la position dépliée d'usage sur le côté opposé du porte-bicyclettes dans l'état plié à l'aide de bras oscillants qui doivent être positionnés au sommet des bras en forme de V (1,2), où les supports (10) sont également localisés physiquement, et où les bras oscillants (14) sont physiquement liés avec les supports (10) au pied des supports.
